# EUROPEAN PATENT SPECIFICATION

(11) **EP 2 526 763 B1**
(45) Date of publication and mention of the grant of the patent: **14.05.2014**
(21) Application number: 12159890.8
(22) Date of filing: 16.03.2012
(51) Int. Cl.: A01K 5/02, A01K 39/01

(54) **A poultry trough feeding system with feeding-trough segment(s) having dry feed and fluid feed inlets**
Geflügeltrogfütterungssystem mit Füttertrogsegment(en) mit Trockenfutter- und Flüssigfuttereinlässen
Système d'alimentation de mangeoire pour volailles doté d'un ou plusieurs segments de mangeoire avec des entrées pour apports fluides et secs

(30) Priority: 18.03.2011 NL 2006424
(43) Date of publication of application: 28.11.2012
(73) Proprietor: ROXELL N.V., 9990 Maldegem (BE)
(72) Inventor: Keirse, Philippe Hyppoliet Pia Maria, 9990 MALDEGEM (BE)
(74) Representative: Riemens, Roelof Harm

(56) References cited:
- EP-A1- 0 060 009
- DE-C1- 19 517 283
- US-A- 3 433 205

## Description

The invention relates to a poultry trough feeding system of the type having a feeding track extending through a poultry stable, which track comprises one or more horizontal longitudinal feeding-trough segments.

Such a trough feeding system for poultry is known from EP-0 060 009 and comprises an endless feeding track meandering through a poultry stable. The track is built up out of a number of upwardly open feeding-trough segments placed at a distance parallel to each other in the stable while extending over substantially the entire length or width of the stable. At their ends the segments are connected with each other by means of bend sections. Together the segments and the bend sections form a continuous track. The feeding-trough segments at their upper sides are each provided with a longitudinal slit-shaped feeding opening. Dry feed is supplied to the track at one or more locations by means of one or more drop tubes connecting directly or indirectly to a silo. The dry feed is distributed over the entire track by means of pulling an endless conveying element through the track, which conveying element here is formed by an open helical spring. The poultry is then able to pick feed out of the feeding-trough segments while standing on the floor of the stable next to one another along the feeding-trough segments.

It has been tried for a long time to feed poultry with wet feed mixtures instead of only with dry feed, because the animals prefer having fluid in their feed and such a wet mixture would be better digestible for the poultry. Also it has appeared that feeding the poultry with a wet feed mixture leads to improved egg laying results, less selective eating behaviour of the animals and possible lower feed consumption while being able to uphold a high and stabile egg production. It even has appeared that a peak in the egg laying production period of the animals can be lengthened in this manner.

For example EP-1 044 603 shows a feeding system in which a wet feed mixture is made in a mixing tank from where it is transported through a pipe by means of a pump towards feeding locations in the form of troughs or the like.

A disadvantage with this known system, however, was that serious problems arose with the growing of bacteria, viruses and mould inside the mixing tank, pump, pipes, valves and the like. This made it necessary to frequently and thoroughly clean the entire system in order to prevent bacterial, viral and mould infection. Furthermore problems arose with crustation and condensation. The wet feed mixture could easily obstruct or block critical parts of the system like the pipe, pump or valves. Thus a constant and hygienic delivery of wet feed mixture to the animals could not be guaranteed and/or required expensive and time-consuming measures.

Another example is shown in WO 2005/029949 where an assembly of a dry feed container and liquid container are intermittently moved together along a number of feeding locations. An Archimedean screw is provided underneath the containers and is able to draw dry feed out of the dry feed container and mixes it with liquid coming from the liquid container. At the end of the Archimedean screw the thus obtained wet feed mixture falls down into one of the feed locations.

However, here also problems occurred with bacteria, viruses and mould, as well as obstruction and blockage.

US-3,433,205 shows a poultry feeding system comprising a dispensing hopper which contains dry feed. The hopper opens out above a set of troughs. Through the troughs a towing chain can be pulled such that the dry feed is divided over the entire trough. Directly downstream of the hopper, at a position above the open troughs, a high pressure water sprayer comprising four nozzles is provided. Dry feed which passes under the nozzles is dampened with the water which is sprayed thereon. Because of the high pressure of the water spray and because of the action of the towing chain, the dry feed is also manipulated somewhat such that the water and dry feed can mix with each other. If desired a medicament can be added to the water before this is sprayed over the dry feed.

A first disadvantage with this known system is that problems with bacteria, viruses and mould are still likely to occur because the spray of water which is jetted at high speed and high pressure against the dry feed may cause it to sputter around. Thus spats of moistened feed particles may spatter out of the troughs and for example against the lower side of the water sprayer. Another disadvantage is that the system is only able to deal with watery fluids which can be spouted under high pressure through the set of nozzles. In addition, the system is particularly suitable to moisten or dampen the dry feed with small amounts of water and/or medicaments. Turning the dry feed into a true wet feed mixture is hardly possible because of the limited amounts of water which can be sprayed over the dry feed passing below the nozzles. For being able to supply enough water over the dry feed, it would be required to have the towing chain run at a very low speed and/or to have the dry feed flow at a very low speed into the troughs. At such low speeds however the poultry would be likely to already eat the troughs fully empty along their starting sections, that is to say along the straight trough sections before the first bend. Thus the dampened feed would be unable to be evenly transported over the entire trough. This would lead to the poultry starting to forcefully fight with each other in order to obtain the best eating positions along the starting sections of the troughs. Finally, it is noted that obtaining a high uniformity of mixing with this known system is hardly possible, because the system only sprays a limited amount of water onto the uppermost layer of the dry feed passing underneath the nozzles. Thus a true and thorough mixing can only be obtained when a very thin layer of dry feed is passed underneath the nozzles. Otherwise the spray of water is unable to reach the lowermost dry feed particles inside the troughs. Transporting such a thin layer of feed through the troughs would however make the system unsuitable for feeding older and larger animals that need to be fed with large amounts of feed, and again would probably lead to the poultry being likely to already eat the troughs fully empty along their starting sections and to the poultry starting to fight with each other.

Up till now nobody appears to have been successful in feeding poultry a true wet feed mixture with an automated feeding system.

The present invention aims to at least partly overcome one or more of the abovementioned disadvantages and/or to provide a usable alternative. In particular the invention aims to provide a user-friendly and cost-effective automated poultry trough feeding system with which a wet feed mixture can be supplied to poultry in a hygienic manner without problems with blockage or the like occurring.

This aim is achieved by a poultry trough feeding system according to claim 1. The system comprises a feeding track to be placed inside a poultry stable. The track has one or more longitudinal feeding-trough segments. Each segment is provided with one or more feeding openings at its upper side. Through these openings the poultry is able to directly pick feed out of the feeding-trough segment while standing on a floor of the stable, for instance a solid, grid or slatted floor. For this the feeding trough segments are to be positioned with their feeding openings at a distance of less than 70cm above the stable floor for large poultry like turkeys, or less than 40cm above the stable floor for smaller poultry like chicken. At one or more positions along the track a dry feed inlet is provided for supplying substantially dry feed component into the feeding track. A driveable conveying element is provided for transporting the feed along the feeding track. At one or more positions along the track, a fluid feed inlet is provided for supplying a fluid feed component, in particular a viscous fluid feed component which comprises nutrients, into the feeding track. According to the inventive thought, this fluid feed inlet has an outflow opening with a minimum cross-sectional dimension of at least 5mm and/or with a cross-sectional area of at least 20 mm², and is connected to a reservoir of fluid feed component. The relative large outflow opening opens out into at least one of the feeding-trough segments at the location of at least one of its one or more feeding openings. This fluid feed component is well able to freely and gradually flow into the trough where it is being mixed together with the dry feed component into a true wet feed mixture. Owing to the specific location of the fluid feed inlet, this mixing advantageously takes place inside the feeding track at the location of said upwardly open feeding-trough segment. This brings along a number of important advantages.

First of all the fluid feed component and the dry feed component advantageously are able to start mixing together at a location where the thus obtained mixture is able to expand freely since it takes place directly inside the upwardly open feeding-trough segment. Depending on the amount of fluid feed to be mixed into the dry feed, the mixture has the tendency to expand to a greater or lesser degree. The risk that the expanding wet feed mixture starts blocking or obstructing the system is now substantially reduced. Second of all the fluid feed component and the dry feed component start mixing together at a location where the thus obtained wet feed mixture can directly be picked away by the animals. The animals are well able to fully pick clean this critical part of the system where the initial mixing takes place, and are able to do so at the end of each feeding cycle. The risk of wet feed mixture particles staying behind inside the system is substantially reduced by this. Growing of bacteria, viruses and mould possibly leading to infections is substantially reduced by this. A transportation of wet feed mixture coming from a mixing vessel through a closed piping before reaching feeding-troughs inside a stable no longer has to take place. The wet feed mixture is truly obtained there where the eating by the poultry starts to take place. It has further appeared that a thorough mixing of the dry feed and fluid feed components is well able to take place inside the feeding track itself by means of a suitably chosen conveying element. The homogeneity of the dry feed component fed into the track is well able to be maintained after being mixed therein together with the fluid component into the wet feed mixture.

Thus for the first time an automated wet feed poultry trough feeding system is obtained which is well able to mix dry and a fluid feed components into wet feed mixtures for poultry in an efficient and reliable manner. Selective eating by the poultry is no longer possible because of the wet somewhat sticky character of the mixture. This helps to guarantee that all the important nutrients in the mixture are consumed by each of the animals. This leads to healthier poultry and improved egg laying results. The relative large outflow opening of the fluid feed inlet has proven to be particularly suitable for pumping rather thick and/or viscous fluid feed components through the fluid feed inlet and at the end of it have it freely flow gradually and easily out of its outflow opening into the dry feed component without sputtering or the like.

The fluid feed component can have all kinds of compositions, and may comprise various and different kinds of nutrients. In particular the fluid feed component is a thick and/or viscous fluid feed component already comprising all kinds of nutrients. With thick and/or viscous it is meant that the fluid feed component has a thickness and/or viscosity which is larger than the ones of water, and in particular are at least 2 times larger than the ones of water. More in particular the viscosity of the fluid feed component lies between 2-350 Cps, and for example is about 50 Cps.

The nutrients inside the fluid feed component preferably comprise residuals from the food and dairy industry, like wheat yeast concentrate, brewery products like beer yeast or brewery spent grain, CCM, etc. Thus an advantageous use can be made of rest products which otherwise would be wasted.

The relative density of the fluid feed component in particular lies between 500-1500 gram/litre.

The particle size of the nutrients inside the fluid feed component in particular varies from 1-10mm.

If desired it is also possible to simply bring clean water via the fluid feed inlet into the feeding track at the location of one of its upwardly open feeding-trough segments. this can for example be advantageous when it is desired to temporarily flush through the fluid feed inlet and trough.

The feeding-trough segment can be provided with one longitudinal slit shaped feeding opening at its upper side which covers substantially the entire upper side of the segment. It is also possible that a plurality of feeding openings is provided, for example separated from each other by means of small bars, which together are also able to cover substantially the entire upper side of the segment.

In particular the fluid feed inlet is connected to a fluid reservoir by means of a fluid dosing unit. This makes it possible to securely dose the amount of fluid feed component to be let into the system during a particular feeding cycle, in dependency of the amount of dry feed component which is let into the system during this same feeding cycle. For example amounts of up to 20-40%, in particular substantially 30%, of fluid feed component can be added into the mixture.

The dosing unit, for example a pump like a peristaltic pump, preferably is driven directly or indirectly by the same drive unit which also drives the conveying element. With indirectly it is for example meant that the drive unit drives the conveying element, and that the conveying element in turn drives the dosing unit. The common drive unit secures that inlet of fluid feed component only takes place when it is able to get directly mixed with dry feed component which at the same time is being transported passed by the fluid feed inlet. Furthermore the speeds of inlet of dry feed and fluid feed components are then automatically tuned at one another. It is however also possible to provide an independent drive for the dosing unit.

In an advantageous embodiment the dosing unit comprises a peristaltic pump. Such a peristaltic pump has proven to be particularly suitable for pumping rather thick and/or viscous fluid feed components through the fluid feed inlet and at the end of it have it freely flow gradually and easily out of its outflow opening into the dry feed component without sputtering or the like.

In the alternative the fluid feed component reservoir may be a pressurized reservoir. The dosing unit can then be formed by a controllable valve.

In a further embodiment the feeding-trough segment comprises a sloping wall section opening out above one or more of the feeding openings. For example the feeding-trough segment may be formed by an upwardly open longitudinal pipe section with two downwardly converging longitudinal side walls connecting thereto. The sloping wall section can then form part of one of said downwardly converging side walls. It is also possible to provide a separate sloping wall section which opens out above the feeding trough. The fluid feed inlet then may have an outflow opening which is partially or fully directed towards the sloping wall section. This has the effect that the fluid feed component is able to first start to flow out over the sloping wall section and to then flow gradually into the pipe section where the dry feed is conveyed through. Owing to this, the fluid feed component is not directly forcedly spouted at the dry feed. Instead, the fluid feed component is able to reach the bottom part of the pipe section by flowing along the sloping wall section and to thus get slowly and well spread in contact with all of the dry feed which is being conveyed through this feeding-trough segment.

According to the invention the fluid inlet has an outflow opening with a minimum cross-sectional dimension of at least 5mm and/or with a cross-sectional area of at least 20 mm². The outflow opening preferably has a circular cross section, but also may be equipped with a non-circular cross section like square or oval. With a minimum cross-sectional dimension of at least 5mm it is meant that the outflow opening in whatever cross-sectional direction has a minimum width of at least 5mm. For a circular outflow opening this means that it has a diameter of at least 5mm. For an oval outflow opening this means that its minor axis (also called minor diameter) needs to be at least 5 mm, whereas of course its major axis (also called major diameter) needs to be larger than its minor axis. For a square outflow opening this means that its width is at least 5mm.

More in particular the outflow opening has a minimum cross-sectional dimension of at least 10mm, and/or has a cross-sectional area of at least 75mm2. Even more in particular the outflow opening has a minimum cross-sectional dimension of about 20mm, and/or has a cross-sectional area of about 300mm2. This makes it possible to use only one fluid outlet opening, out of which the fluid feed component can flow rather quickly but still gradually, to reduce the speed of the fluid without sputtering against walls of the segment or against the dry feed.

Further preferred embodiments are stated in the dependent subclaims.

The invention also relates to a method for feeding wet feed mixture to poultry according to claim 16 or 17.

The invention shall be explained in more detail below with reference to the accompanying drawings, in which:
Fig. 1 is a schematic overview of an embodiment of the trough feeding system according to the invention having two endless tracks;
Fig. 2 shows an enlarged view of part of the system of fig. 1;
Fig. 3a-c show a cross-sectional, longitudinal section and top view of fig. 2;
Fig. 4 shows a cross-sectional view of fig. 2 at the position of the fluid feed inlet;
Fig. 5 shows a variant of fig. 4;
Fig. 6 shows a further variant of fig. 4;
Fig. 7 shows an alternative of fig. 1; and
Fig. 8 shows a schematic flow chart of fig. 7 having further feeding tracks added thereto at different floor levels.

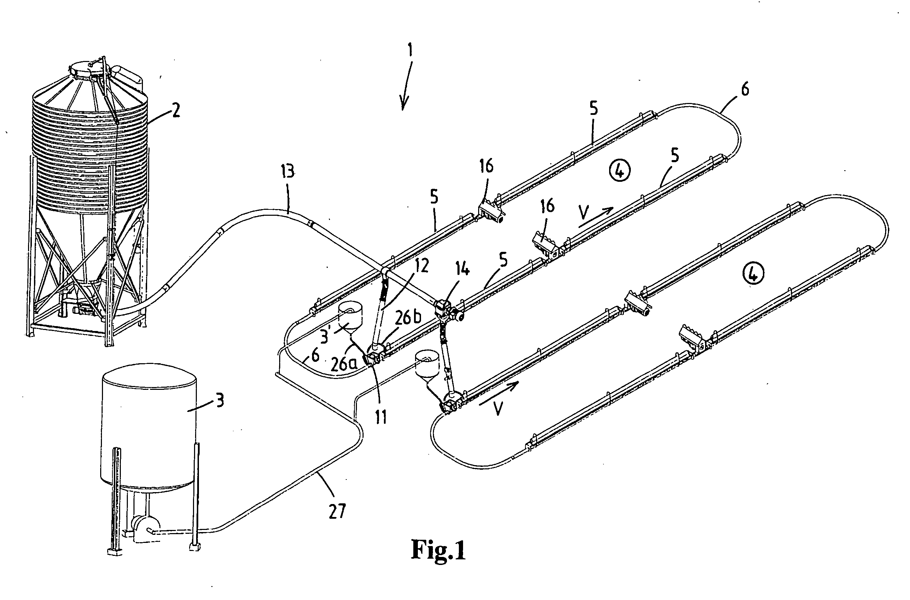

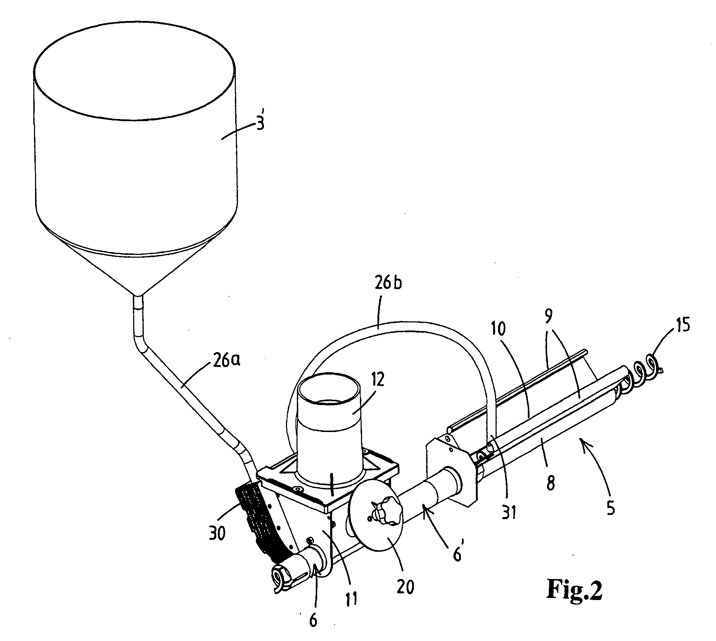

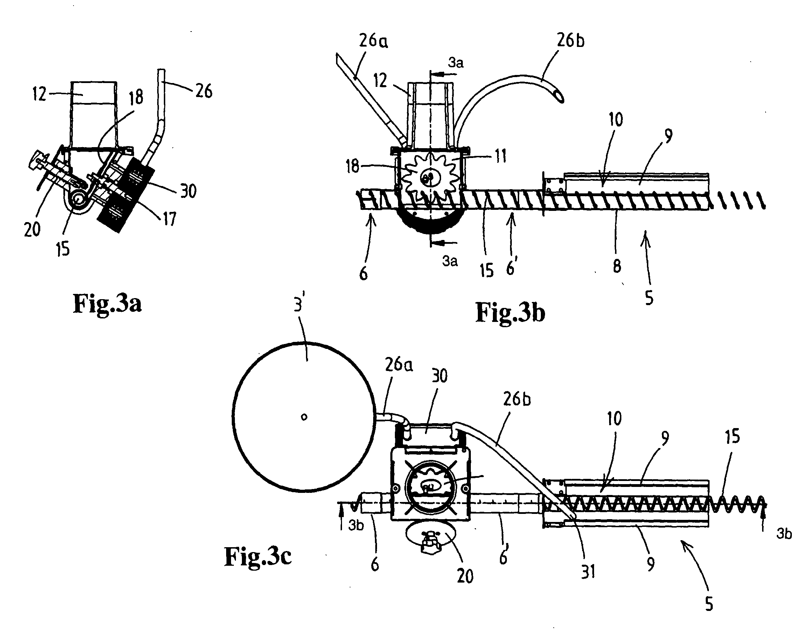

The poultry trough feeding system in its entirety is given the reference numeral 1 in fig. 1. The system 1 comprises a dry feed silo 2 and a fluid feed silo 3, as well as two endless feeding tracks 4. Each feeding track 4 comprises four substantially straight feeding-trough segments 5 and two bend sections 6. The two feeding-trough segments 5 together have a length of more than 15 meter, in particular more than 30 meter, such that they preferably are able to extend over the width or length of an average poultry stable floor. The bend sections 6 are formed by semi-circular circumferentially closed pipe sections. Each feeding trough segment 5 is formed by a straight pipe section 8 which at its upper side over its entire length has a slit-shaped opening (see fig. 2 and 3). Two outwardly converging straight side walls 9 adjoin the slit shaped pipe opening. The opening in the pipe section 8 and the two side walls 9 connecting thereto delimit a feeding opening 10.

Near one of the outer ends of one of the bend sections 6, a dry feed inlet is connected to the track 4 by means of a so-called intake boot 11 provided at the lower end of a drop tube 12. The intake boot 11 can be fed with dry feed via the drop tube 12 which in turn can be fed with dry feed via a transportation duct 13 connecting to the silo 2. The transportation duct 13 in this case is formed by a circumferentially closed pipe through which a so-called flex auger comprising a helical conveying organ extends, which flex auger is driveable in rotation by a drive unit 14 in order to feed dry feed from the silo 1 towards the drop tubes 12. The intake boot 11 forms a funnel-shaped chamber which at one side connects to the bend section 6 and at the other side connects to an intermediate straight pipe section 6'. The intermediate straight pipe section 6' is circumferentially closed and in turn connects to one of the feeding-trough segments 5. The circumferentially closed pipe section 6' has the advantage that the poultry there is blocked from already starting to eat dry feed before it is mixed with the fluid feed component into the aimed wet feed mixture.

An endless conveying element formed by an open helical spring 15 extends in the longitudinal direction through the entire feeding track 4, including the pipe sections 6, 6', the feeding-trough segments 5 and the intake boot 11. The helical spring 15 is formed by a suitably bent (rectangular) wire which is moveable in the longitudinal direction through the feeding track 4 by means of two drive units 16. See also EP-0 060 009. The drive units 16, which here are formed by electromotors, which each are able to drive a sprocket wheel of which the teeth penetrate between windings of the spring 15. During driving the teeth push and pull the spring forward in a direction v through the track 4.

Inside the intake boot 11 a driven shaft 17 with a gear wheel 18 mounted thereon is provided. The gear wheel 18 grips with its teeth into distinctive windings of the helical spring 15. A transportation of the spring 15 through the track 4 has the effect that the gear wheel 18 gets driven in rotation. During rotation the gear wheel 18 also forms a stirring organ which rotates with its teeth through the amount of dry feed present at that moment inside the intake boot 11. This helps to keep the dry feed loose inside the intake boot 11 and have it flow more easily into the helical spring 15 as soon as the spring 15 is moved forward through the track 4 with each time new empty sections of the spring 15 getting pulled underneath the hopper 12.

At the lower side of the intake boot 11 a manually and/or automatically controllable valve organ 20 is provided which is able to shut the intake boot 11 partly off the track 4 in such a way that the feeding height of the feed in track 4 can be regulated.

Downstream of the intake boot 11, a fluid feed inlet in the form of a flexible hose 26 is provided. The hose 26 comprises a suction part 26a which can feed itself with fluid feed coming from a sub-silo 3' which in turn is connected via a transportation duct 27 to the silo 3. The fluid feed now advantageously can be a relative (compared to water) thick viscous fluid feed which comprises all kinds of nutrients. A peristaltic fluid pump 30 is provided which is connected to the driven shaft 17 of the gear wheel 18. The flexible hose 26 extends through the peristaltic fluid pump 30. A driving of the spring 15 drives the gear wheel 18 which in turn drives the pump 30. The pump 30 forces fluid to start flowing through the suction part 26a towards a pressure delivery part 26b having an outlet opening 31 at its free end. The outflow opening 31 has a circular cross section with a diameter D of approximately 20mm. Such a large diameter D has proven to be well suitable for having relative thick and viscous fluid feed being able to smoothly flow into the feeding-trough segment 5.

The hose 26 is positioned to open out with its outlet opening 31 against one of the side walls 9, that is to say into that particular feeding-trough segment 5 which is positioned directly downstream of the pipe sections 6, 6' between which the intake boot 11 is provided.

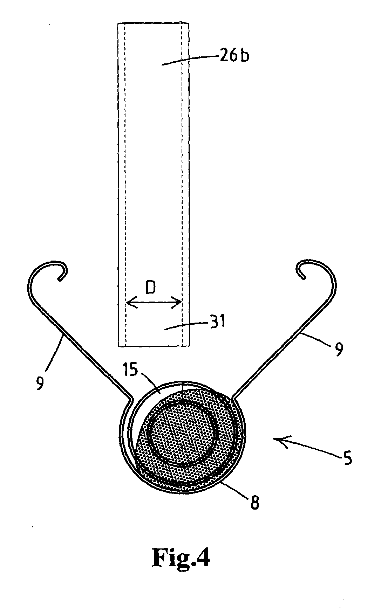

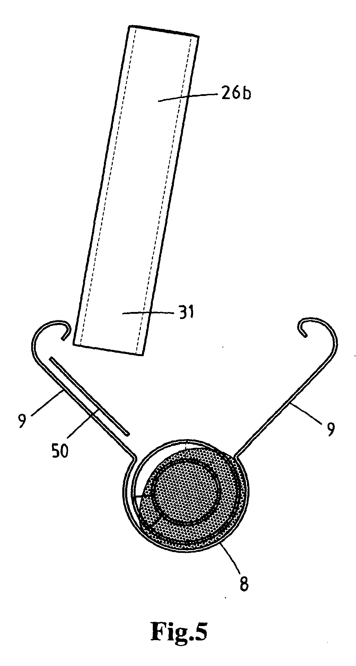

The two outwardly converging straight side walls 9 form sloping wall sections against or towards one of which the outflow opening 31 of the fluid feed inlet is partially or wholly directed. Fig. 4 shows an embodiment wherein the outflow opening 31 is partially directed against one of the side walls 9 and partially into the pipe section 8. Fig. 5 shows an embodiment wherein the outflow opening 31 in its entirety is directed against a separate sloping wall section 50. This separate sloping wall section 50 here is formed by a plate which is positioned in front of one of the side walls 9 in such a way that the fluid feed is well able to gradually flow alongside the sloping wall section 50 into the feeding-trough segment 5. The advantage of providing a separate sloping wall section is that it can easily be made out of a material which is well able to withstand influences of the fluid feed.

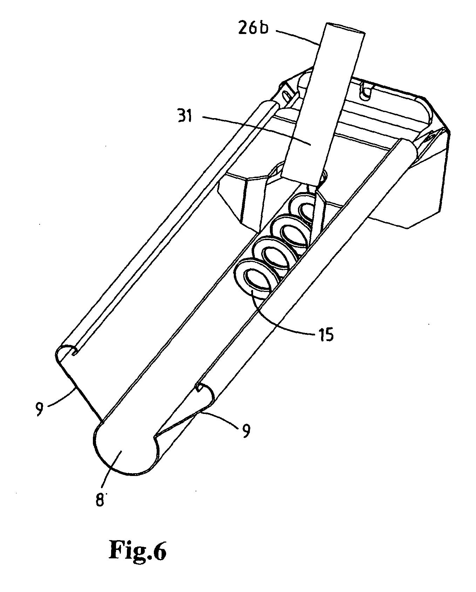

It is noted that it is also possible to have the outflow opening 31 open out above a centre part of the feeding-trough segment 5. An example hereof is shown in fig. 6

Since the pump 30 is indirectly driven by the same drive units 16, a driving of those drive units 16 not only has the effect of the spring 15 moving through the track 4 while taking dry feed out of the intake boot 11 along with it, but at the same time also doses fluid feed out of the sub-silo 3' into one of the feeding-trough segments 5. Thus a driving of the drive units 16 pulls the helical spring 15 through the endless track 4 and thus transports dry feed passed by the fluid feed outflow opening 31. From there, the dry and fluid feed components start being mixed with each other by means of the same pulling of the helical spring 15 through the track 4 including the segment 5. Advantageously the amount of fluid feed in this way can be accurately tuned to the amount of dry feed entering the system. If for whatever reason the drive units 16 starts rotating somewhat slower or faster, then at the same time both the intake of dry feed and the inlet of fluid feed is correspondingly decreased or increased.

The outflow opening 31 is positioned along an upstream starting part of the feeding-trough segment 5. Thus this upstream starting part is well able to form a mixing zone where the feed components have the freedom to expand somewhat during the mixing.

Advantageously the helical spring 15 sets itself slightly into a rotating movement along its central axis because of being pulled through the bend sections 6 of the track 4. The spring 15 does not have to be driven in rotation for achieving this. The rotating movement of the helical spring 15 helps to quickly and thoroughly mix the dry and fluid feed components together. The obtained wet feed mixture is then conveyed by the helical spring 15 through the entire track 4 and thus also along the other respective feeding-trough segments 5. The poultry is able to pick out the wet feed mixture directly out of each of the feeding-trough segments 5.

A feeding cycle can be started by means of a simple starting of the drive units 16 and then stopping it as soon as all the segments 5 have gotten filled. Then the poultry is given enough time to eat the segments empty. Since the bend sections 6 still are filled with wet feed mixture, it is then possible to have the system run "empty". This can be done by closing of the dry feed inlet (and, if the sub-silo 3' is not empty yet, also the fluid feed inlet), while pulling the spring 15 over at least the length of the bend section 6 further along the track 4. In the embodiment shown, the dry feed inlet can easily be closed by stopping the drive unit 14.

Between the dry feed inlet and the fluid feed inlet preferably a distance of at least 5 cm, more in particular at least 10 cm, is present. This helps to guarantee that during a stand still of the spring 15, when the poultry is eating, fluids from the wet feed mixture are not able to penetrate back towards the dry feed inlet and form blockages there.

Under special circumstances it is also possible to temporarily only feed dry feed component to the poultry with this system. For this it suffices to simply close the fluid feed inlet.

During a day a plurality of feeding cycles takes place, in particular 5-6. After each feeding cycle the sub-silo 3' is filled again with fluid feed from the main silo 3 by means of a suitable controlling of a valve in the duct 27. It is also possible to dispense with the set of sub-silo's 3' and to connect the hoses 26 directly to the silo 3.

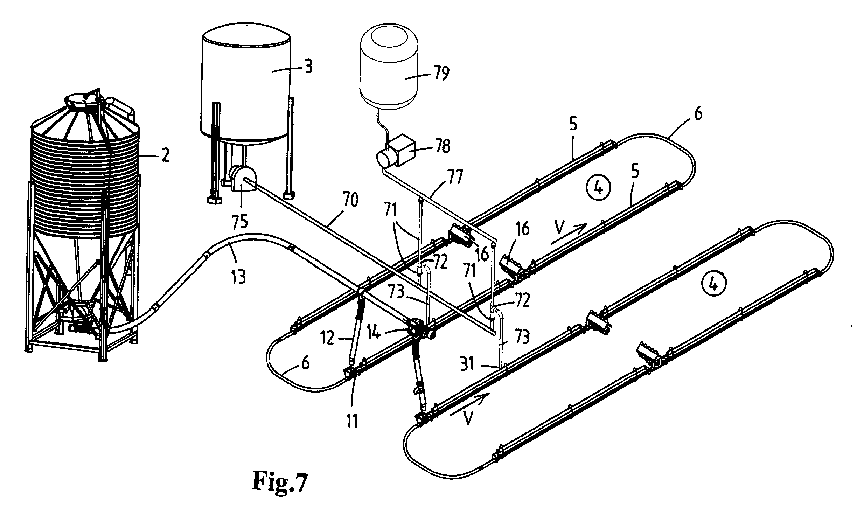

In fig. 7 a variant of fig. 1 is shown which only needs one central pump for its fluid feed. Similar parts of the poultry trough feeding system have been given the same reference numerals. Again a dry feed inlet is provided which comprises an intake boot 11 which is provided adjacent and downstream of a bend section 6 of a feeding track 4. Further downstream of the bend section 6 a fluid feed inlet is provided. The fluid feed inlet comprises a substantially horizontal base duct 70 which at one end connects to a fluid feed component reservoir 3. At the other end the base duct 70 connects to two upwardly extending substantially vertical riser ducts 71. Each riser duct 71 has a branch which forms an overflow point 72 which connects to a substantially vertical outflow duct 73. The outflow ducts 73 are equipped with said outflow openings 31 having diameters of at least 5mm.

Between the base duct 70 and the reservoir 3 an electrically driven pump 75 is provided. When this pump 75 is driven, fluid feed component is pumped from the reservoir 3 through the base duct 70 into the two riser ducts 71. In order to evenly distribute the fluid feed over both riser ducts 71, the base duct 70 has been given a larger cross sectional dimension than the riser ducts 71. With this the diameters of the ducts preferably lie between 8-125mm. As soon as the fluid feed starts rising inside the riser ducts 71 and reaches the overflow points 72, it shall start to flow into the outflow ducts 73 and from there into the feeding-trough segments 5. This type of distribution has proven very advantageous for the proper distribution of thick viscous fluid feed components possibly also comprising somewhat larger bits and pieces of nutrients.

The riser ducts 71 extend further upwards past the overflow points 72. Those upper parts of the riser ducts 71 are connected to a flushing line 77 which via a pump 78 is connected to a flushing water reservoir 79. Thus it is possible to periodically rinse the various ducts of the fluid feed inlet with water or another suitable cleaning medium. Advantageously the upper parts of the riser ducts 71 and/or the flushing line 77 are further able to perform a bleeding function for air to escape from out of the riser ducts 71 when fluid feed is pumped into those ducts.

Preferably some or all of the ducts of the fluid feed inlet can be made out of transparent material such that the user is well able to check the progress and proper functioning of the pumping process. The connections between the various ducts of the fluid inlet preferably are formed by easily disconnectable connections like a screw coupling or the like. Thus the ducts can easily be dismantled in the case that a blockage should occur.

The distance between the dry feed inlet and the fluid feed inlet in this fig. 7 embodiment preferably is at least 50 cm, and more in particular lies between 1-2 m.

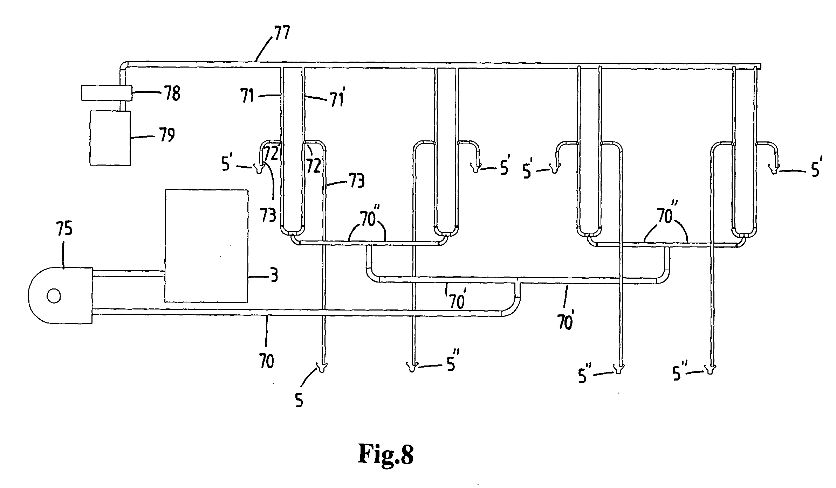

In fig. 8 it is schematically shown in a side view how a set of four upper feeding-trough segments 5' and four lower feeding trough segments 5" can be fed with fluid feed component. Here a first base duct 70 branches of into two second base ducts 70', which in turn branch of into four third base ducts 70". Like in fig. 7 each third base duct 70" branches of into two riser ducts 71. The total of eight riser ducts 71 comprise overflow points A1, A2, B1, B2, C1, C2, D1, D2 leading to the respective upper and lower floor feeding-trough segments 5', 5". In order to obtain a substantially even distribution of the fluid feed over the various ducts, here also use is being made of making the upstream ducts at each branch somewhat smaller in cross-section compared to the downstream duct(s) such that suitable restrictions are formed which help in properly distributing the fluid feed over the ducts. For larger stables an even higher number of branches, base ducts and riser ducts can be used.

Besides the embodiment shown numerous variants are possible. For example the several parts of the system may be given different dimensions and shapes. Instead of using a helical spring other types of conveying elements are also possible, like another type of pulled, dragged along conveying element, for example a towing chain or a disc-cable, but also a conveying element which is driven in rotation, like an Archimedes screw can be used. When using a towing chain or disc-cable, it is necessary to provide corner wheels in the bend sections along which the conveying element can run. The bend sections may also be provided with one or more feeding openings at their upper side, and thus also form feeding trough segments out of which the poultry is able to eat and thus help to prevent wet feeding particles to remain behind in those bend sections. Instead of a funnel-shaped intake boot at the end of a drop tube and (peristaltic or hose) pump other kinds of inlet/dosing units for the dry and fluid feed components can be used. Instead of one or more common drive units which directly drive the conveying element and indirectly drive the pump, it is also possible to use independent drive units for the respective components. For example the pump 30 may be driven by its own drive unit. The bend sections may also extend vertical in order to connect to another floor level inside a stable.

Thus according to the invention a simple and reliable trough-feeding system is obtained with which it is possible to feed wet feed mixtures to the poultry in a hygienic and fast manner. The dry and fluid feed components are kept separate as long as possible since the mixing of the dry and fluid feed components is postponed as much as possible and takes place at animal level inside an open trough. De-mixing of the wet feed mixture is hardly possible during a feeding cycle because the spring divides the track in a plurality of small compartments. The system operates under low pressure and offers the possibility to bring large amounts of fluid feed into the dry feed.

## Claims

1. A poultry trough feeding system (1), comprising:
- a feeding track (4) having at least one longitudinal feeding-trough segment (5) which at its upper side is provided with one or more feeding openings, in particular one or more feeding openings (10) together covering substantially the entire upper side of the segment;
- a dry feed inlet for supplying substantially dry feed component into the feeding track,
- a conveying element (15) for transporting feed along the feeding track; and
- a drive unit (16) for driving the conveying element;
in which a fluid inlet (26) is provided for supplying a fluid into the feeding track for being mixed in said feeding track together with the dry feed component, wherein the fluid inlet opens out into the feeding-trough segment at the location of its one or more feeding openings,
**characterized in that**,
the fluid inlet is a fluid feed inlet having an outflow opening (31) with a minimum cross-sectional dimension of at least 5mm and/or with a cross-sectional area of at least 20 mm², and
the fluid feed inlet (26) is connected to a reservoir (3) of fluid feed component for supplying this fluid feed component into the feeding track for being mixed in said feeding track together with the dry feed component into a wet feed mixture.

2. System according to claim 1, wherein the fluid feed inlet (26) is connected to the reservoir by means of a fluid feed dosing unit comprising a pump, in particular a peristaltic pump (30).

3. System according to claim 2, wherein the fluid feed dosing unit is drivable by said same drive unit (16) for driving the conveying element (15).

4. System according to one of the preceding claims, in which a sloping wall section (50) is provided flowing out above one or more of the feeding openings, wherein the fluid feed inlet has its outflow opening (31) directed at least partially towards the sloping wall section (50).

5. System according to claim 4, wherein the feeding trough segment comprises the sloping wall section (50).

6. System according to one of the preceding claims, in which the feeding track comprises a plurality of feeding-trough segments connected with each other by means of bend sections (6), wherein the fluid feed inlet (26) is positioned opening out into the feeding-trough segment at the location of its one or more feeding openings adjacent and downstream one of the bend sections (6) and along an upstream part of the feeding-trough segment (5).

7. System according to one of the preceding claims, wherein the fluid feed inlet (26) opening out into the feeding-trough segment at the location of its one or more feeding openings (10) is positioned at a distance of at least 5cm downstream of the dry feed inlet along the feeding track.

8. System according to one of the preceding claims, wherein the feeding track is an endless track and the conveying element is an endless conveying element moveable in the longitudinal direction through the feeding track, wherein the endless conveying element is an open helical spring (15).

9. System according to one of the preceding claims, wherein the feeding-trough segment (5) has a minimum length of 15 meter, in particular at least 30 meter.

10. System according to one of the preceding claims, wherein the fluid feed component inside the reservoir (3) is viscous and comprises nutrients.

11. System according to one of the preceding claims, wherein the fluid feed inlet (26) comprises a base duct (70) which at one end connects to the reservoir (3) and on the other end connects to at least one substantially vertical riser duct (71), the riser duct having an overflow point (72) which connects to an outflow duct (73) which is equipped with said outflow opening (31).

12. System according to claim 11, wherein the riser duct (71) extends further upwards past the overflow point and with its upper end connects to a bleeding/flushing out line (77).

13. System according to claim 11 or 12, wherein the base duct (70) has larger cross sectional dimensions than the riser duct (71).

14. System according to one of claims 11-13, wherein the base duct connects to at least two riser ducts (71).

15. System according to one of the preceding claims, wherein a part of the feeding-trough segment (5) extending between the dry feed inlet and the fluid feed inlet is formed by an intermediate circumferentially closed pipe section.

16. Method for feeding poultry using a system according to one of the preceding claims, comprising the steps of:
- feeding a dry feed component into the feeding track (4);
- feeding a fluid feed component into the feeding-trough segment (5) at the location of its one or more feeding openings;
- mixing the dry and fluid feed components into a wet feed mixture inside the feeding-trough segment at the location of its one or more feeding openings;
- driving the conveying element (15) for transporting the wet feed mixture along the feeding track; and
- having the poultry pick out the wet feed mixture out of the feeding-trough segment.

17. Method according to claim 16, wherein the fluid feed component is viscous and comprises nutrients.

## Patentansprüche

1. Geflügeltrogfütterungssystem (1), Folgendes umfassend:
- eine Fütterbahn (4) mit mindestens einem längs verlaufenden Füttertrogsegment (5), das an seiner Oberseite mit einer oder mehreren Fütteröffnungen, insbesondere einer oder mehreren Fütteröffnungen (10), die zusammen im Wesentlichen die gesamte Oberseite des Segments bedecken, versehen ist;
- einen Trockenfuttereinlass, um einen im Wesentlichen trockenen Futterbestandteil in die Fütterbahn zuzuführen,
- ein Förderelement (15), um Futter entlang der Fütterbahn zu transportieren; und
- eine Antriebseinheit (16), um das Förderelement anzutreiben;
wobei ein Flüssigkeitseinlass (26) vorgesehen ist, um eine Flüssigkeit in die Fütterbahn zuzuführen, um in der Fütterbahn mit dem trockenen Futterbestandteil gemischt zu werden, wobei der Flüssigkeitseinlass in das Füttertrogsegment an der Stelle von dessen einer oder mehreren Fütteröffnungen mündet,
**dadurch gekennzeichnet, dass**
es sich bei dem Flüssigkeitseinlass um einen Flüssigfuttereinlass handelt, der eine Auslauföffnung (31) mit einer Mindestquerschnittsabmessung von mindesten 5 mm und/oder einer Querschnittsfläche von mindestens 20 mm² besitzt, und
der Flüssigfuttereinlass (26) an einen Vorratsbehälter (3) für den Flüssigfutterbestandteil angeschlossen ist, um diesen Flüssigfutterbestandteil in die Fütterbahn zuzuführen, um in der Fütterbahn zusammen mit dem Trockenfutterbestandteil zu einem Nassfuttergemisch gemischt zu werden.

2. System nach Anspruch 1, wobei der Flüssigfuttereinlass (26) mittels einer Flüssigfutterdosiereinheit, die eine Pumpe, insbesondere eine Peristaltikpumpe (30) umfasst, an den Vorratsbehälter angeschlossen ist.

3. System nach Anspruch 2, wobei die Flüssigfutterdosiereinheit durch dieselbe Antriebseinheit (16) zum Antreiben des Förderelements (15) antreibbar ist.

4. System nach einem der vorhergehenden Ansprüche, in dem ein sich neigender Wandabschnitt (50) über einer oder mehreren der Fütteröffnungen ausströmend vorgesehen ist, wobei die Ausströmöffnung (31) des Flüssigfuttereinlasses zumindest teilweise zum sich neigenden Wandabschnitt (50) hin gerichtet ist.

5. System nach Anspruch 4, wobei das Füttertrogsegment den sich neigenden Wandabschnitt (50) aufweist.

6. System nach einem der vorhergehenden Ansprüche, wobei die Fütterbahn eine Vielzahl von Füttertrogsegmenten aufweist, die mittels gekrümmter Abschnitte (6) miteinander verbunden sind, wobei der Flüssigfuttereinlass (26) in das Füttertrogsegment an der Stelle von dessen einer oder mehreren Fütteröffnungen angrenzend an und stromabwärts von einem der gekrümmten Abschnitte (6) und entlang eines stromaufwärts gelegenen Teils des Füttertrogsegments (5) mündend angeordnet ist.

7. System nach einem der vorhergehenden Ansprüche, wobei der Flüssigfuttereinlass (26), der in das Füttertrogsegment an der Stelle von dessen einer oder mehreren Fütteröffnungen (10) mündet, in einem Abstand von mindestens 5 cm stromabwärts von dem Trockenfuttereinlass entlang der Fütterbahn angeordnet ist.

8. System nach einem der vorhergehenden Ansprüche, wobei es sich bei der Fütterbahn um eine Endlosbahn und bei dem Förderelement um ein Endlosförderelement handelt, das sich in der Längsrichtung durch die Fütterbahn bewegen kann, wobei es sich bei dem Endlosförderelement um eine offene Schraubenfeder (15) handelt.

9. System nach einem der vorhergehenden Ansprüche, wobei das Füttertrogsegment (5) eine Mindestlänge von 15 Meter, insbesondere mindestens 30 Meter hat.

10. System nach einem der vorhergehenden Ansprüche, wobei der Flüssigfutterbestandteil im Inneren des Vorratsbehälters (3) viskos ist und Nährstoffe umfasst.

11. System nach einem der vorhergehenden Ansprüche, wobei der Flüssigfuttereinlass (26) einen Grundkanal (70) aufweist, der an einem Ende eine Verbindung zum Vorratsbehälter (3) und am anderen Ende eine Verbindung zu mindestens einem im Wesentlichen vertikalen Steigkanal (71) herstellt, wobei der Steigkanal eine Überlaufstelle (72) hat, die eine Verbindung zu einem Ausströmkanal (73) herstellt, der mit der Ausströmöffnung (31) ausgestattet ist.

12. System nach Anspruch 11, wobei sich der Steigkanal (71) über die Überlaufstelle hinaus weiter nach oben erstreckt und mit seinem oberen Ende eine Verbindung zu einer Entlüftungs-/Ausspülleitung (77) herstellt.

13. System nach Anspruch 11 oder 12, wobei der Grundkanal (70) eine größere Querschnittsabmessung hat als der Steigkanal (71).

14. System nach einem der Ansprüche 11 bis 13, wobei der Grundkanal eine Verbindung zu mindestens zwei Steigkanälen (71) herstellt.

15. System nach einem der vorhergehenden Ansprüche, wobei ein Teil des Füttertrogsegments (5), der sich zwischen dem Trockenfuttereinlass und dem Flüssigfuttereinlass erstreckt, durch einen dazwischenliegenden, umfänglich geschlossenen Rohrabschnitt gebildet ist.

16. Verfahren zum Füttern von Geflügel unter Verwendung eines Systems nach einem der vorhergehenden Ansprüche, folgende Schritte umfassend:
- Einspeisen eines Trockenfutterbestandteils in die Fütterbahn (4);
- Einspeisen eines Flüssigfutterbestandteils in das Füttertrogsegment (5) an der Stelle von dessen einen oder mehreren Fütteröffnungen;
- Mischen des Trocken- und Flüssigfutterbestandteils zu einem Nassfuttergemisch im Inneren des Füttertrogsegments an der Stelle von dessen einer oder mehreren Fütteröffnungen;
- Antreiben des Förderelements (15), um das Nassfuttergemisch entlang der Fütterbahn zu transportieren; und
- das Geflügel das Nassfuttergemisch aus dem Füttertrogsegment picken zu lassen.

17. Verfahren nach Anspruch 16, wobei der Flüssigfutterbestandteil viskos ist und Nährstoffe umfasst.

## Revendications

1. Système d'alimentation de mangeoire pour volailles (1) comprenant :
une trajectoire d'alimentation (4) ayant au moins un segment de mangeoire longitudinal (5) qui, au niveau de son côté supérieur, est prévu avec une ou plusieurs ouvertures d'alimentation, en particulier une ou plusieurs ouvertures d'alimentation (10) recouvrant ensemble sensiblement tout le côté supérieur du segment ;
une entrée pour apports secs pour amener un composant d'apport sensiblement sec dans la trajectoire d'alimentation,
un élément de transport (15) pour transporter l'apport le long de la trajectoire d'alimentation ; et
une unité d'entraînement (16) pour entraîner l'élément de transport ;
dans lequel une entrée de fluide (26) est prévue pour amener un fluide dans la trajectoire d'alimentation, pour être mélangé dans ladite trajectoire d'alimentation conjointement avec le composant d'apport sec, dans lequel l'entrée de fluide s'ouvre dans le segment de mangeoire à l'emplacement de ses une ou plusieurs ouvertures d'alimentation,
**caractérisé en ce que** :
l'entrée de fluide est une entré pour apports fluides ayant une ouverture de sortie (31) avec une dimension transversale minimum d'au moins 5 mm et/ou avec une surface transversale d'au moins 20 mm², et
l'entrée pour apports fluides (26) est raccordée à un réservoir (3) de composant d'apport fluide pour amener ce composant d'apport fluide dans la trajectoire d'alimentation pour être mélangé dans ladite trajectoire d'alimentation conjointement avec le composant d'apport sec en un mélange d'apport humide.

2. Système selon la revendication 1, dans lequel l'entrée pour apports fluides (26) est raccordée au réservoir au moyen d'une unité de dosage d'apport fluide comprenant une pompe, en particulier une pompe péristaltique (30).

3. Système selon la revendication 2, dans lequel l'unité de dosage d'apport fluide peut être entraînée par ladite même unité d'entraînement (16) pour entraîner l'élément de transport (15).

4. Système selon l'une des revendications précédentes, dans lequel on prévoit une section de paroi inclinée (50) sortant au-dessus des une ou plusieurs ouvertures d'alimentation, dans lequel l'entrée pour apports fluides a son ouverture de sortie (31) dirigée au moins partiellement vers la section de paroi inclinée (50).

5. Système selon la revendication 4, dans lequel le segment de mangeoire comprend la section de paroi inclinée (50).

6. Système selon une des revendications précédentes, dans lequel la trajectoire d'alimentation comprend une pluralité de segments de mangeoire raccordés entre eux au moyen de sections de coude (6), dans lequel l'entrée pour apports fluides (26) est positionnée pour déboucher dans le segment de mangeoire à l'emplacement de ses une ou plusieurs ouvertures d'alimentation adjacentes et en aval de l'une des sections de coude (6) et le long d'une partie en amont du segment de mangeoire (5).

7. Système selon une des revendications précédentes, dans lequel l'entrée pour apports fluides (26) débouchant dans le segment de mangeoire à l'emplacement de ses une ou plusieurs ouvertures d'alimentation (10) est positionnée à une distance d'au moins 5 cm en aval de l'entrée pour apports secs le long de la trajectoire d'alimentation.

8. Système selon l'une des revendications précédentes, dans lequel la trajectoire d'alimentation est une trajectoire sans fin et l'élément de transport est un élément de transport sans fin mobile dans la direction longitudinale passant par la trajectoire d'alimentation, dans lequel l'élément de transport sans fin est un ressort hélicoïdal ouvert (15).

9. Système selon l'une des revendications précédentes, dans lequel le segment de mangeoire (5) à une longueur minimum de 15 mètres, en particulier au moins 30 mètres.

10. Système selon l'une des revendications précédentes, dans lequel le composant d'apport fluide à l'intérieur du réservoir (3) est visqueux et comprend des nutriments.

11. Système selon l'une des revendications précédentes, dans lequel l'entrée pour apports fluides (26) comprend un conduit de base (70) qui, au niveau d'une extrémité, se raccorde au réservoir (3) et au niveau de l'autre extrémité, se raccorde à au moins un conduit de colonne sensiblement verticale (71), le conduit de colonne ayant un point de débordement (72) qui se raccorde à un conduit de sortie (73) qui est équipé avec ladite ouverture de sortie (31).

12. Système selon la revendication 11, dans lequel le conduit de colonne (71) s'étend en outre vers le haut au-delà du point de débordement et avec son extrémité supérieure, se raccorde à une ligne de purge/rinçage (77).

13. Système selon la revendication 11 ou 12, dans lequel le conduit de base (70) a des dimensions transversales supérieures au conduit de colonne (71).

14. Système selon l'une des revendications 11 à 13, dans lequel le conduit de base se raccorde à au moins deux conduits de colonne (71).

15. Système selon l'une des revendications précédentes, dans lequel une partie du segment de mangeoire (5) s'étendant entre l'entrée pour apports secs et l'entrée pour apports fluides est formée par une section de tuyau intermédiaire fermée de manière circonférentielle.

16. Procédé pour alimenter de la volaille à l'aide d'un système selon l'une des revendications précédentes, comprenant les étapes consistant à :
amener un composant d'apport sec dans la trajectoire d'alimentation (4) ;
amener un composant d'apport fluide dans le segment de mangeoire (5) à l'emplacement de ses une ou plusieurs ouvertures d'alimentation ;
mélanger les composants d'apports sec et fluide en un mélange d'apport humide à l'intérieur du segment de mangeoire à l'emplacement de ses une ou plusieurs ouvertures d'alimentation ;
entraîner l'élément de transport (15) pour transporter le mélange d'apport humide le long de la trajectoire d'alimentation ; et
faire picorer à la volaille le mélange d'apport humide hors du segment de mangeoire.

17. Procédé selon la revendication 16, dans lequel le composant d'apport fluide est visqueux et comprend des nutriments.
